# FASCICULE DE BREVET EUROPEEN

(11) **EP 1 074 065 B1**
(45) Date de publication et mention de la délivrance du brevet: **04.08.2004**
(21) Numéro de dépôt: 99914610.3
(22) Date de dépôt: 19.04.1999
(51) Int. Cl.: H01Q 19/06, H01Q 3/14, H01Q 5/00

(54) **SYSTEMES D'ANTENNES DE POURSUITE DE SATELLITES A DEFILEMENT**
ANTENNENSYSTEM ZUR VERFOLGUNG VON NICHTGEOSTATIONÄREN SATELLITEN
ANTENNA SYSTEM FOR TRACKING MOVING SATELLITES

(30) Priorité: 23.04.1998 FR 9805111
(43) Date de publication de la demande: 07.02.2001
(73) Titulaire: THOMSON multimedia, 92100 Boulogne Billancourt (FR)
(72) Inventeur: HIRTZLIN, Patrice, F-92100 Boulogne Billancourt (FR); FOURDEUX, Henri, F-92100 Boulogne Billancourt (FR); LOUZIR, Ali, F-92100 Boulogne Billancourt (FR)
(74) Mandataire: Ruellan-Lemonnier, Brigitte
(86) Numéro de dépôt international: PCT/FR1999/000913
(87) Numéro de publication internationale: WO 1999/056348

(56) Documents cités:
- EP-A- 0 707 356
- WO-A-93/02486
- FR-A- 2 770 343
- US-A- 4 531 129

## Description

La présente invention concerne un système d'émission et/ou de réception de signaux et plus particulièrement un système d'antennes de poursuite de satellites à défilement.

Jusqu'à présent, les télécommunications commerciales par satellites ont été réalisées en quasi-totalité par les satellites géostationnaires, particulièrement intéressants en raison de leurs positions relatives immuables dans le ciel. Or, le satellite géostationnaire présente des inconvénients majeurs tel que des atténuations importantes liées à la distance séparant les antennes usagers du satellite géostationnaire ( de l'ordre de 36000 kilomètres, les pertes correspondantes s'élevant alors à environ 205 dB dans la bande Ku ) et des délais de transmission ( typiquement de l'ordre de 250 ms à 280 ms ) devenant ainsi nettement perceptibles et gênants notamment pour des applications en temps réel telles que la téléphonie, la vidéoconférence, etc... Par ailleurs, l'orbite géostationnaire, située dans le plan équatorial, pose un problème de visibilité pour les régions à latitudes élevées, les angles d'élévation devenant très faibles pour les régions proches des pôles.

Les alternatives à l'emploi du satellite géostationnaire sont :
- l'utilisation de satellites sur des orbites elliptiques inclinées, le satellite étant alors quasi stationnaire au-dessus de la région située à la latitude de son apogée pendant une durée pouvant atteindre plusieurs heures,
- la mise en oeuvre de constellations de satellites en orbites circulaires, notamment en orbite basse ("Low Earth Orbit" ou LEO en langue anglaise) ou en orbite moyenne ("Mid Earth Orbit" ou MEO en langue anglaise), les satellites de la constellation défilant à tour de rôle en visibilité du terminal usager pendant une durée allant d'une dizaine de minutes à environ une heure.

Dans les deux cas, le service ne peut être assuré en permanence par un seul satellite, la continuité du service imposant le défilement au-dessus de la zone de service de plusieurs satellites se succédant les uns aux autres.

Le document US 4531129 décrit un système d'antennes à balayage à lentille de Luneberg comportant plusieurs sources. Cependant, ce système est trop complexe.

L'invention a donc pour but de réaliser un système d'antennes de poursuite de satellites, permettant de capter au moins deux satellites à défilement se succédant dans la zone de visibilité du système et remédiant aux inconvénients des systèmes de l'art antérieur.

A cet effet, invention a pour objet un système d'émission et/ou de réception de signaux dans un système de communication par satellites à défilement comprenant :
- Un moyen de focalisation pluridirectionnel du type lentille possédant une surface de focalisation comportant une pluralité de points focaux, ledit moyen étant fixe par rapport au sol, un premier élément émetteur et/ou récepteur de signaux et un second élément émetteur et/ou récepteur de signaux,
- Un premier moyen de déplacement du premier élément le long d'un premier support agencé selon une première ligne des points focaux, correspondant à la trajectoire d'un premier satellite de défilement, un second moyen de déplacement du second élément le long d'un second support agencé selon une seconde ligne des points focaux correspondant à la trajectoire d'un second satellite à défilement,
- Des moyens de commande des premier et second moyens de déplacement pour déplacer respectivement les premier et second éléments le long desdites première et seconde lignes de points focaux et des moyens de commande pour déterminer l'élément émetteur et/ou récepteur avec lequel les échanges de données utiles doivent être effectuées et pour commuter celui-ci à des moyens de traitement des signaux reçus et/ou émis, caractérisé en ce que lesdits premier et second éléments émetteur et/ou récepteur comprennent des antennes réalisées en technologie circuits imprimés.

De cette sorte, le système selon l'invention permet d'émettre et/ou capter au moins deux faisceaux spatialement distincts et de ne pas souffrir d'un délai de commutation lors de la commutation d'un premier satellite vers un autre satellite, délai qui serait dû au repositionnement des moyens de réception ayant visé le premier satellite vers une position visant le second satellite. Dans la présente demande, le terme « actif » sera attribué à tout élément échangeant avec un satellite dit également « actif » au moins une majeure partie des données utiles. Le terme « passif » désignera tout autre élément échangeant avec un satellite dit « passif » des données de signalisation et peu de données utiles. Les moyens de support étant indépendants, les premier et deuxième éléments peuvent se déplacer le long de la surface de focalisation sans se gêner mutuellement.

Pour que le déplacement des premier et deuxième éléments ne soit pas perturbé par la présence de câbles, lesdits premier et deuxième éléments comportent respectivement des première et deuxième antennes de réception et/ou d'émission de signaux et ledit dispositif comprend des troisième et quatrième antennes d'émission et/ou de réception et en ce que, en fonctionnement, lesdits premier et deuxième éléments et ledit dispositif sont reliés par une liaison radioélectrique sans fil.

Selon un mode de réalisation, lesdits moyens de support sont agencés de part et d'autre de la surface de focalisation.

Selon un mode de réalisation, lesdits moyens de focalisation de type lentille comprennent une lentille de type Luneberg sphérique.

Selon un mode de réalisation, lesdits moyens de support comprennent des rails en demi-cercles de centres de courbure quasiment confondus à celui de la lentille couplés à des moyens d'actionnement desdits moyens de support.

Selon un mode de réalisation, lesdits moyens d'actionnement comportent des moyens de rotation des premiers et seconds moyens de support pour une poursuite en azimuth des satellites.

Selon un mode de réalisation, ces moyens de rotation comprennent un arbre de rotation passant par le centre de la lentille de Luneberg, autour duquel lesdits premiers et seconds moyens de support sont aptes à tourner.

Selon un mode de réalisation, lesdits premiers et seconds moyens de support comportent des rails et en ce que lesdits premier et deuxième éléments sont pourvus de moteurs leur permettant de se mouvoir sur lesdits rails.

Selon un mode de réalisation, les moyens de contrôle commandent les moteurs des éléments et les moyens d'actionnement des rails.

Selon un mode de réalisation, lesdits premier et deuxième éléments d'émission et/ou de réception comprennent respectivement un bloc convertisseur de fréquence pour les signaux d'émission et/ou un bloc convertisseur de fréquence pour les signaux de réception.

Selon un mode de réalisation, le système selon l'invention comporte en outre au moins un troisième élément émetteur et/ou récepteur se trouvant au voisinage d'un même point focal du système pour la communication avec au moins un satellite géostationnaire.

Selon un mode de réalisation, le système selon l'invention est destiné à la poursuite de satellites à défilement suivant des trajectoires prédéfinies et en ce que lesdites première et seconde lignes de points focaux correspondent aux trajectoires d'un premier et second satellites.

Dans la présente demande, le terme « signal descendant » devra s'interpréter comme un signal véhiculé dans le sens du satellite vers une unité intérieure d'une habitation à laquelle est relié le système, alors que celui de « signal montant » sera relatif à un signal véhiculé dans le sens de l'unité intérieure à l'habitation vers le satellite.

D'autres caractéristiques et avantages de la présente invention ressortiront de la description de l'exemple de réalisation qui va suivre, pris à titre d'exemple non limitatif, en référence aux figures annexées dans lesquelles :
- la figure 1 représente un schéma simplifié d'une coupe verticale d'un mode de réalisation du système selon l'invention,
- la figure 2 représente une vue partielle du système selon une coupe transversale de la figure 1,
- les figures 3.a, 4.a et 5.a représentent respectivement trois modes de réalisation d'une cinquième/sixième antenne d'émission/réception, alors que les figures 3.b, 4.b et 5.b représentent respectivement une vue latérale éclatée des plaquettes illustrées sur les figures 3.a, 3.b et 3.c,
- la figure 6 représente un mode de réalisation d'un élément émetteur et/ou récepteur selon l'invention.

Pour simplifier la description, les mêmes références seront utilisées dans ces dernières figures pour désigner les éléments remplissant des fonctions identiques.

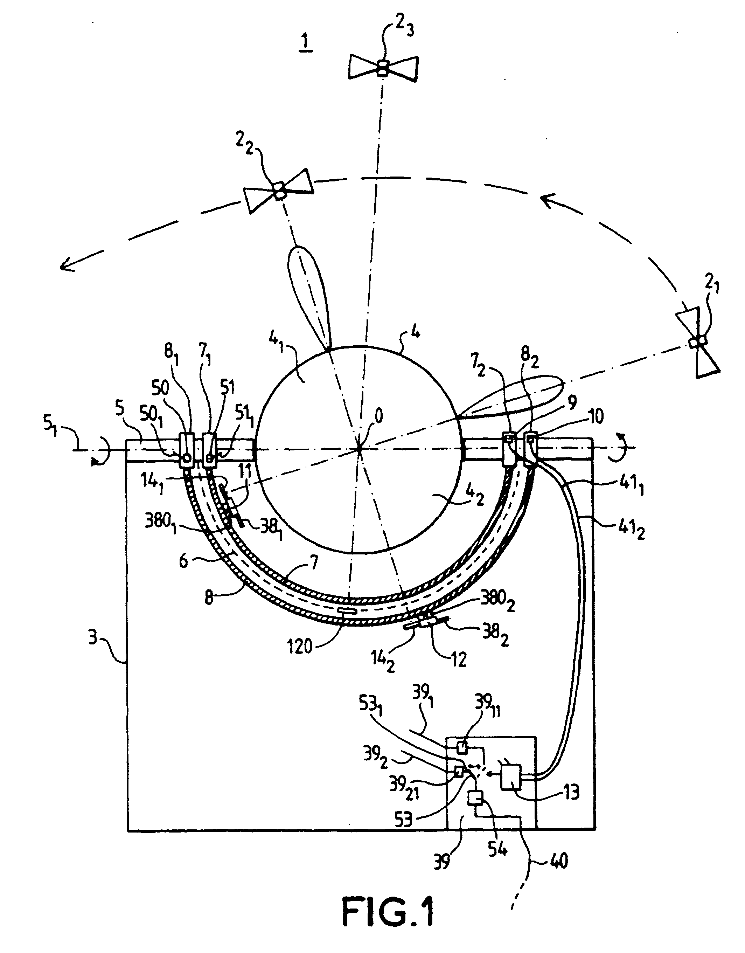

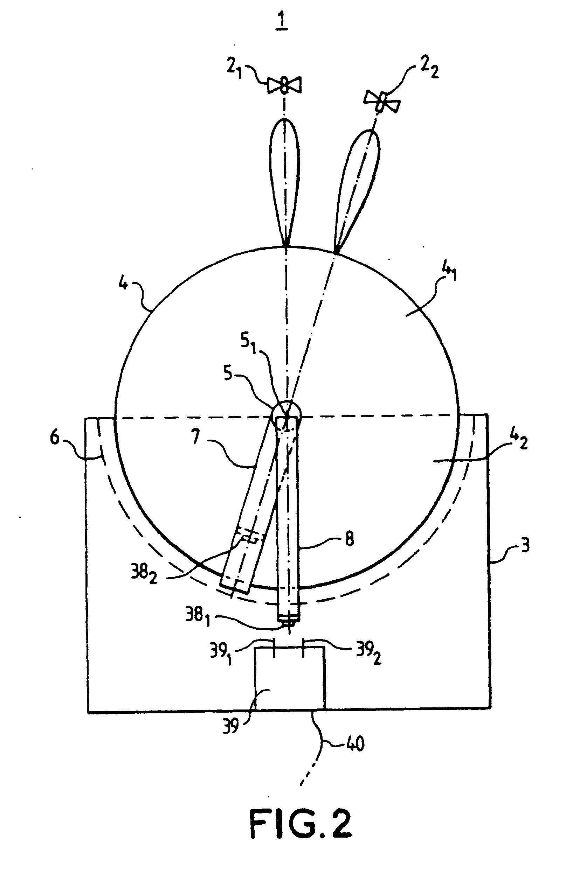

La figure 1 représente un schéma simplifié d'une coupe verticale d'un système 1 selon l'invention destiné à la poursuite de satellites à défilement 2₁, 2₂, alors que la figure 2 représente une vue partielle du système de poursuite selon une coupe transversale de la figure 1.

Selon le mode de réalisation décrits sur les figures 1 et 2, le système de poursuite 1 est intégrée dans un boîtier 3 d'unité extérieure parallélépipèdique se trouvant en général à l'extérieur d'une habitation non représentée et en visibilité de l'espace que traversent les satellites 2₁, 2₂. Cette unité extérieure est en général reliée à une unité intérieure à l'habitation qui est un décodeur. La partie supérieure du système 1 orientée vers l'espace libre de rayonnement où se trouvent les satellites 2₁, 2₂ présente une lentille du type de Luneberg 4 fixe connue en soi et deux parties d'un arbre cylindrique de rotation 5 dont l'axe 5₁ passe par le centre O de la lentille 4. Le plan transversal à la coupe de la figure 1 passant par l'axe 5₁ délimite deux demi-sphères 4₁, 4₂, la demi-sphère 4₁ faisant face à l'espace libre de rayonnement alors que la demi-sphère 4₂ est comprise dans le boîtier 3. La lentille 4 possède une surface de focalisation 6 de part et d'autre part de laquelle se trouvent des rails 7, 8. La lentille 4 est choisie de manière à obtenir la surface de focalisation 6 extérieure à la surface physique de la lentille 4. Les rails 7, 8 ont des profils en demi-cercles dans le plan de la coupe de la figure 1 longeant la surface de focalisation 6, de centres quasiment confondus avec le centre 0 de la lentille 4, et ont leurs extrémités respectives liées aux deux parties de l'arbre 5 par des moyens de connexion référencés respectivement (7₁, 7₂) et (8₁, 8₂). Le rayon du rail 7 est inférieur à celui du rayon 8. Chaque rail 7, 8 est indépendant et peut tourner autour de l'axe de l'arbre 5 grâce à respectivement des moteurs 9, 10. Les rails 7, 8 sont agencées sensiblement le long de deux lignes de points focaux.

Sur les rails 7, 8 peuvent se déplacer, grâce à des roues dentées 380₁ et 380₂ s'engrenant sur la crémaillère munie de crans des rails 7, 8 respectivement deux éléments émetteurs/récepteurs ou relais 11, 12 dont le mouvement est contrôlé par un système de contrôle 13 ou microcontrôleur 13. Ce dernier commande les moteurs 9, 10 des rails 7, 8 faisant pivoter ces derniers autour de leur axe de rotation 5₁, et commande également des moteurs 50, 51 aptes à commander le déplacement des relais 11, 12 le long des rails 7, 8. La commande desdits moteurs 50, 51 des relais 11, 12 se réalise par une transmission sans fil au moyen d'antennes 50₁, 51₁, de signaux issus dudit microcontrôleur 13 générés à partir d'informations reçues par les relais 11, 12 et/ou d'informations connues à priori sur les trajectoires des satellites 2₁, 2₂, la localisation géographique du système 1, etc... Ces informations sont enregistrées dans une mémoire non figurée du microcontrôleur 13.

Chaque relais 11, 12 comporte respectivement une plaquette imprimée 14₁, 14₂ d'émission/réception de signaux échangés avec respectivement les satellites 2₁, 2₂.

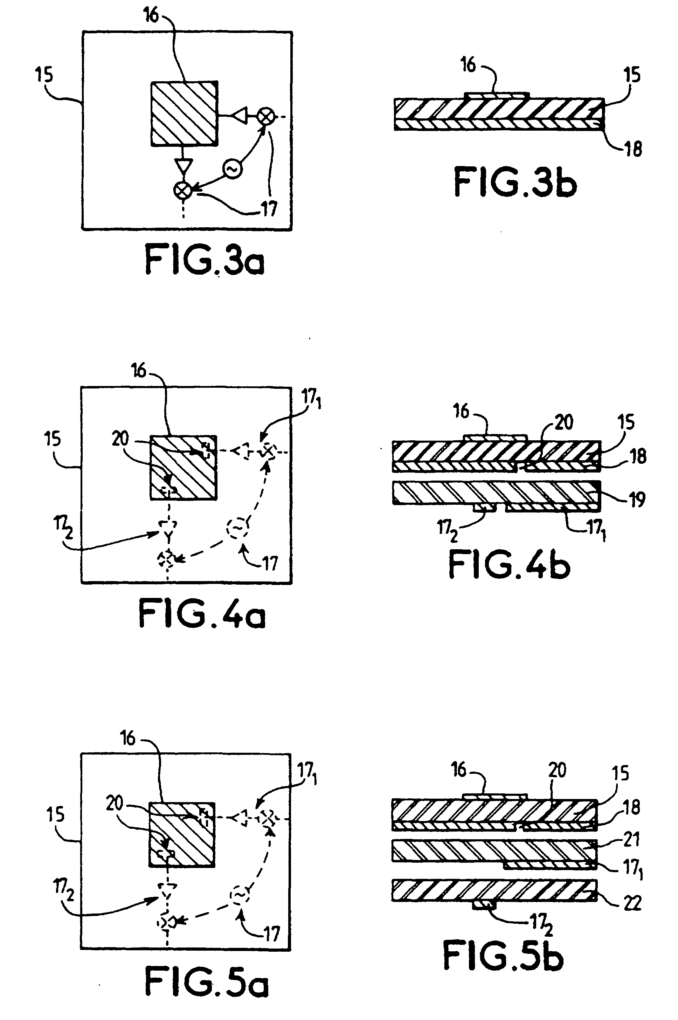

Les figures 3.a, 4.a et 5.a représentent respectivement trois modes de réalisation de ladite plaquette imprimée 14₁, 14₂ d'émission/réception, alors que les figures 3.b, 4.b et 5.b représentent respectivement une vue latérale éclatée des plaquettes illustrées sur les figures 3.a, 3.b et 3.c.

Ces trois modes de réalisation de la plaquette imprimée sont réalisés dans la technologie connue en soi des circuits microrubans ("microstrip technology" en langue anglaise). Les figures 3.a, 3.b et 3.c font apparaître l'utilisation d'une couche 15 de substrat, du verre téflon par exemple, sur laquelle est disposée une pastille 16 en regard de l'espace de rayonnement où se trouvent les satellites 2₁, 2₂. La surface opposée de la couche 15 est formée d'une surface métallique 18 constituant le plan de masse de la couche 15.

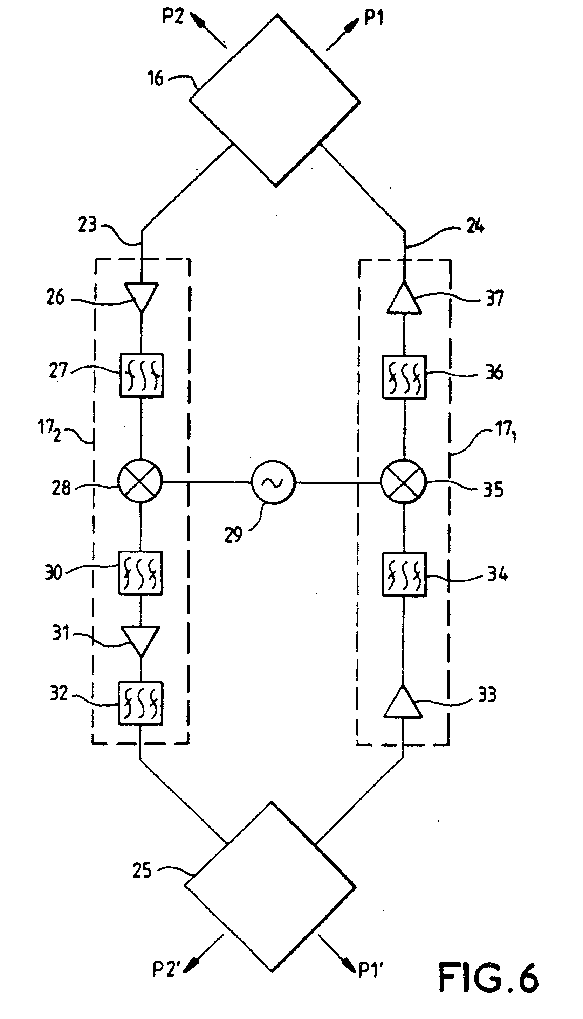

Selon le mode de réalisation des figures 3.a et 3.b, les circuits d'émission/réception 17 associés à la pastille 16 et détaillés sur la figure 6 excitent la pastille 16 selon deux polarisations orthogonales. Suivant cet exemple de réalisation, la pastille 16 et les circuits d'émission/réception 17 sont disposés sur la même surface supérieure de la couche 15. Il est entendu qu'une polarisation est dédiée à la voie d'émission des signaux par le système alors qu'une seconde polarisation est dédiée à la voie de réception des signaux par le système.

Selon le mode de réalisation des figures 4.a et 4.b, la plaquette imprimée comporte deux couches 15 et 19. La première couche de substrat 15 comporte sur sa surface supérieure la pastille 16 et sur sa surface inférieure le plan de masse 18 dans laquelle des fentes de couplage 20 sont réalisées. Une deuxième couche 19 est disposée en regard de la surface 18. Sur la surface inférieure de la couche 19 opposée à la surface en contact avec la couche 15 sont agencés les circuits d'émission/réception 17.

Selon le mode de réalisation des figures 5.a et 5.b, la plaquette imprimée comporte cette fois-ci trois couches 15, 21 et 22. Comme précédemment, la première couche de substrat 15 comporte sur sa surface supérieure la pastille 16 et sur sa surface inférieure le plan de masse 18 dans laquelle les fentes de couplage 20 sont réalisées. Une deuxième couche 21 est disposée en regard de la surface 18. Sur la surface inférieure de la couche 21 opposée à la surface en contact avec la couche 15 sont agencés le circuit d'émission 17₁ faisant partie des circuits 17. Une troisième couche 22 est disposée en regard de la surface inférieure de la couche 21. Sur la surface inférieure de la couche 22 opposée à la surface en contact avec la couche 21 sont agencés le circuit de réception 17₂ faisant partie des circuits 17 excitant la pastille 16 selon deux polarisations orthogonales.

Selon ces trois derniers modes de réalisation, l'émission et la réception sont réalisées suivant deux polarisations orthogonales pour optimiser l'isolation entre une voie de réception 23 des signaux provenant des satellites 2₁ 2₂, et une voie d'émission 24 des signaux à émettre auxdits satellites 2₁, 2₂.

De surcroît, on peut remplacer la structure comportant une seule pastille 16 sur la première couche de substrat 15 par une structure comportant deux pastilles séparées d'une couche de substrat, en regard l'une de l'autre et résonant à des fréquences décalées de façon à élargir la bande passante de fréquence.

La figure 6 représente un mode de réalisation des circuits d'émission/réception 17 compris dans les relais 11, 12 selon l'invention. Le circuit d'émission 17₁ est sur la voie d'émission 24 alors que le circuit de réception 17₂ se trouve sur la voie de réception 23.

Dans cet exemple de réalisation, les circuits d'émission/réception 17 sont reliés d'une part aux circuits d'excitation de la première pastille 16 pour l'émission/réception de signaux et d'autre part aux circuits d'excitation d'une seconde pastille 25 d'émission/réception de signaux, la pastille 25 étant également excitée selon deux polarisations orthogonales. L'émission et la réception des signaux par la pastille 25 peut entre autres se réaliser selon l'un des modes de réalisation décrits sur les figures 3.a, 3.b, 4.a, 4.b, 5.a et 5.b. Les relais 11, 12 comportent donc respectivement des antennes d'émission/réception 38₁, 38₂ en plaquettes imprimées qui peuvent être similaires à celles décrites dans lesdites figures.

L'entrée du circuit de réception 17₂ est reliée à un port de sortie de la pastille 1 6 excitant celle-ci suivant un premier côté de la pastille 16 selon une polarisation P1 et la sortie du circuit 17₂ est reliée à un port d'entrée de la pastille 25 excitant celle-ci suivant un premier côté de la pastille 25 selon une polarisation P1'. De même, l'entrée du circuit d'émission 17₁ est reliée à un port de sortie de la pastille 25 excitant celle-ci suivant un côté orthogonal au premier côté de la pastille 16 et selon une polarisation P2' orthogonale à P1' et la sortie du circuit 17₁ est reliée à un port d'entrée de la pastille 25 excitant celle-ci suivant un côté orthogonal au premier côté de la pastille 25 et selon une polarisation P2 orthogonale à P1. Le circuit de réception 17₂ comporte à son entrée un amplificateur à faible bruit 26 dont la sortie est reliée à un filtre passe-bande 27 dont la bande passante est centrée sur la fréquence de réception satellite. La sortie de ce filtre 27 est reliée à une première entrée d'un premier mélangeur 28 dont une seconde entrée est attaquée par le signal de pompe d'un oscillateur local 29. La sortie du mélangeur 28 est reliée à l'entrée d'un filtre passe-bande 30 de fréquence centrale centrée sur la fréquence de transmission de la pastille 25. Les signaux ainsi filtrés sont amplifiés par un filtre 31 puis de nouveau filtrés par un filtre passe-bande 32 éliminant les fréquences parasites ("spurious emissions" en langue anglaise) générées lors de la conversion impliquant le mélangeur 28 et l'oscillateur 29. La sortie du filtre 32 est reliée à l'entrée du circuit d'excitation en émission de la pastille 25.

De la même manière, le circuit d'émission 17₁ comporte à son entrée un amplificateur 33 dont la sortie est reliée à un filtre passe-bande 34 dont la bande passante est centrée sur la fréquence de réception de la pastille 25. La sortie de ce filtre 34 est reliée à une première entrée d'un premier mélangeur 35 dont une seconde entrée est attaquée par le signal de pompe de l'oscillateur local 29. La sortie du mélangeur 35 est reliée à l'entrée d'un filtre passe-bande 36 de fréquence centrale centrée sur la fréquence de transmission de la pastille 16. Les signaux ainsi filtrés sont amplifiés par un amplificateur de puissance 37 dont la sortie est reliée à l'entrée du circuit d'alimentation en émission de la pastille 16.

Le système 1 comporte dans son fond un dispositif fixe d'émission/réception appelé dans la suite terminal 39 comportant deux antennes d'émission/réception 39₁, 39₂ communiquant avec les antennes 38₁, 38₂, ledit terminal 39 étant relié par un câble coaxial 40 à l'unité intérieure de l'habitation non représentée comportant un décodeur de télévision. Chaque antenne 39₁, 39₂ est reliée respectivement à un circuit de conversion de fréquence 39₁₁, 39₂₁ dont la sortie est reliée à une borne 53₁ d'un commutateur 53. Cette borne 53₁ peux commuter entre la sortie du circuit 39₁₁ et la sortie du circuit 39₂₁ en fonction de la visibilité des satellites (2₁, 2₂). Cette commutation est commandée par le système de contrôle 13. L'autre borne du commutateur est reliée à un circuit convertisseur de fréquence 54 dont la sortie est reliée au câble 40 de sortie vers l'unité intérieure de l'habitation. Il peut être envisagé que pendant une durée prédéterminée, cycliquement par exemple, les signaux reçus par les deux éléments sont exploités au niveau du décodeur, c'est à dire que, par exemple, les trames de données reçues par les deux éléments sont considérées comme des données utiles et on commute les deux éléments aux circuits de traitement 54. Une superposition des signaux est fait par exemple pour optimiser la qualité des signaux lors du passage d'un premier satellite vers un second.

En outre, le système comporte un troisième élément émetteur/récepteur ou relais fixe 120 se trouvant au voisinage de la surface de focalisation (6) du système et apte à communiquer en permanence avec un satellite géostationnaire (2₃).

Le système de poursuite 1 selon l'invention peut fonctionner de la manière suivante selon un mode de fonctionnement aucunement limitatif :

Le spectre de fréquence dédié aux échanges entre l'unité extérieure et le satellite actif peut être réduit, par exemple, lors de la transposition de fréquence dans le relais actif 11, 12, à une bande de 700 MHz pour la réception des signaux par le dispositif 39 et une bande de 300 Mhz pour l'émission des signaux par le dispositif 39, dans le cadre des systèmes d'émission/réception par satellite. Il peut être établi que la majeure partie du spectre dite "bande active" soit dédiée à la liaison entre le satellite actif et le dispositif 39. Seule une partie minime du spectre dite "bande passive" est dédiée aux échanges d'informations concernant la poursuite des satellites et la gestion de la commutation d'un satellite à un autre ("handover" en langue anglaise). Des commutateurs électroniques non représentés et connus en soi ont pour rôles de commuter la bande de fonctionnement de l'élément 11, 12 actif dans la bande active alors que la bande de fonctionnement de l'élément 11, 12 passif est réduite à la bande passive.

Le satellite en passe de quitter le champ de visibilité du système 1 ou celui en passe d'être dans le champ de visibilité de celui-ci, envoie dans la séquence de données transmises par celui-ci une ou plusieurs informations ordonnant au système 1 de procéder à la commutation des relais 11, 12. Au moment de cette commutation, l'information est transmise aux deux relais 11, 12. Ceux-ci échangent leurs rôles, l'un devenant actif, l'autre passant en veille et allant se placer à l'endroit optimal pour être en visibilité du prochain satellite pour préparer la commutation suivante. Le système de contrôle 13, qui est compris dans le dispositif 39, commande les trajectoires respectives des relais 11, 12 par l'action des roues dentées 380₁ et 380₂ s'engrenant dans la crémaillère munie de crans et commande également les moyens d'actionnement 9, 10 reliés, par exemple, par des câbles coaxiaux 41₁ et 41₂, au système de contrôle 13. Ces moyens d'actionnement sont par exemple des moteurs 9, 10. Ces commandes permettent respectivement l'ajustement des angles d'élévation et d'azimut des relais 11, 12. Ainsi, lors de dérives de trajectoires par rapport à la trajectoire préétablie du satellite 2₁, 2₂, le système de contrôle recevant des informations de la part dudit satellite 2₁, 2₂ quant à des corrections de trajectoires à effectuer, commande l'actionnement des moteurs 50, 51 pour le déplacement des relais 11, 12 sur les rails 7, 8 et l'actionnement des moteurs 9, 10 pour les déplacements des relais 11, 12 dans les plans orthogonaux aux rails 7, 8 par rotation de ceux-ci autour de leur axe 5₁.

Les fréquences d'émission/réception sans-fil de la pastille 25 sont choisies de manière à obtenir un spectre suffisant pour les signaux de réception et d'émission. Afin d'éviter d'éventuelles interférences, chaque relais 11, 12 émet et reçoit dans une sous-bande de fréquence propre.

Bien entendu, l'invention n'est pas limitée aux modes de réalisation tels que décrits. Ainsi, la lentille de Luneberg peut être cylindrique.

De même, on peut imaginer tout autre moyen de contrôle pour le réglage des angles d'élévation et d'azimut des éléments 11, 12 ainsi que tout autre emplacement.

Enfin, la gestion de la commutation du satellite 2₁ au satellite 2₂ peut être faite de toute autre manière que celle imaginée pour expliquer le fonctionnement de la présente invention. Elle peut comporter toutes méthodes connues d'accès multiples auxdits au moins deux satellites 2₁, 2₂.

## Revendications

1. Système d'émission et/ou réception de signaux dans un système de communication par satellites à défilement, comprenant :
- un moyen de focalisation pluridirectionnel (4) du type lentille possédant une surface de focalisation comportant une pluralité de points focaux, ledit moyen étant fixe par rapport au sol.
- un premier élément (11) émetteur et/ou récepteur de signaux et un second élément (12) émetteur et/ou récepteur de signaux,
- un premier moyen de déplacement (380₁) du premier élément (11) le long d'un premier support (7) agencé selon une première ligne des points focaux correspondant à la trajectoire d'un premier satellite à défilement (2₁),
- un second moyen de déplacement (380₂) du second élément (12) le long d'un second support (8) agencé selon une seconde ligne des points focaux correspondant à la trajectoire d'un second satellite à défilement (2₂),
- des moyens de commande (50, 51) des premier (380₁) et second (380₂) moyens de déplacement aptes à déplacer respectivement les premier et second éléments (11, 12) le long desdites première et seconde lignes de points focaux, et
- des moyens de commande pour déterminer l'élément émetteur et/ou récepteur (11 ; 12) avec lequel les échanges de données utiles doivent être effectués et pour commuter celui-ci à des moyens de traitement (54) des signaux reçus et/ou émis, **caractérisé en ce que** lesdits premier (11) et second (12) éléments émetteur et/ou récepteur comprennent des antennes réalisées en technologie circuits imprimés.

2. Système selon la revendication 1, caractérisé ce qu'il comporte de plus au moins un troisième élément (120) émetteur et/ou récepteur fixe se trouvant au voisinage d'un point focal du système et apte à communiquer en permanence avec au moins un satellite géostationnaire (2₃).

3. Système selon l'une des revendications 1 ou 2, **caractérisé en ce que** les moyens de contrôle (13) sont compris dans un dispositif fixe (39) du système.

4. Système selon la revendication 3, **caractérisé en ce que**, en fonctionnement, lesdits premier (11) et deuxième (12) éléments et ledit dispositif (39) sont reliés par une liaison radioélectrique sans fil.

5. Système selon l'une des revendications 1 à 4, **caractérisé en ce que** le moyen de focalisation pluridirectionnel du type lentille est constitué par une lentille de type Luneberg.

6. Système selon l'une des revendications 1 à 5, **caractérisé en ce que** les premier et second supports (7, 8) sont couplés à des moyens de rotation (9, 10) permettant une poursuite en azimuth des satellites

7. Système selon la revendication 1, **caractérisé en ce que** le circuit imprimé est constitué par un substrat comportant sur une face une pastille excitée selon deux polarisations orthogonales par des circuits d'émission / réception positionnés sur ladite face et sur l'autre face une couche formant plan de masse.

8. Système selon la revendication 1, **caractérisé en ce que** le circuit imprimé est constitué par un premier substrat comportant sur une face une pastille et sur l'autre face une couche formant plan de masse munie de moyens de couplage et par un deuxième substrat dont la face opposée à la face en contact avec le premier substrat reçoit les circuits d'émission et/ou de réception.

9. Système selon la revendication 8, **caractérisé en ce qu'**il comporte de plus un troisième substrat, le second substrat recevant soit les circuits d'émission soit les circuits de réception et le troisième substrat recevant soit les circuits de réception soit les circuits d'émission.

## Claims

1. System for transmitting and/or receiving signals in a communication system employing nonsynchronous satellites, comprising:
- a pluridirectional focusing means (4) of lens type possessing a focusing surface including a plurality of focal points, said means being fixed with respect to the ground,
- a first signals transmitter and/or receiver element (11) and a second signals transmitter and/or receiver element (12),
- a first means of displacement (380₁) of the first element (11) along a first support (7) arranged along a first line of focal points corresponding to the trajectory of a first nonsynchronous satellite (2₁),
- a second means of displacement (380₂) of the second element (12) along a second support (8) arranged along a second line of focal points corresponding to the trajectory of a second nonsynchronous satellite (2₂),
- means of control (50, 51) of the first (380₁) and second (380₂) means of displacement able to displace the first and second elements (11, 12) respectively along the said first and second lines of focal points,and
- control means for determining the transmitter and/or receiver element (11; 12) with which the useful data exchanges are to be performed and for switching the latter element to means (54) for processing the signals received and/or transmitted, **characterized in that** said first (11) and second (12) transmitter and/or receiver element comprises antennas realised in printed-circuit technology.

2. System according to Claim 1, **characterized in that** it furthermore includes at least one third fixed transmitter and/or receiver element (120) located in the vicinity of a focal point of the system and able to communicate permanently with at least one geostationary satellite (2₃).

3. System according to either of Claims 1 and 2, **characterized in that** the monitoring means (13) are included within a fixed device (39) of the system.

4. System according to Claim 3, **characterized in that**, while operational, the said first (11) and second (12) elements and the said device (39) are linked by a wireless radioelectric link.

5. System according to one of Claims 1 to 4, **characterized in that** the pluridirectional focusing means of lens type consists of a Luneberg-type lens.

6. System according to one of Claims 1 to 5, **characterized in that** the first and second supports (7, 8) are coupled to means of rotation (9, 10) allowing azimuthal tracking of the satellites.

7. System according to Claim 1, **characterized in that** the printed circuit is constituted by a substrate which includes on one face a patch excited in two orthogonal polarizations by transmission/reception circuits positioned on the said face and on the other face a layer forming an earth plane.

8. System according to Claim 1, **characterized in that** the printed circuit is constituted by a first substrate which includes on one face a patch and on the other face a layer forming an earth plane furnished with coupling means and by a second substrate whose face opposite the face in contact with the first substrate receives the transmission and/or reception circuits.

9. System according to Claim 8, **characterized in that** it furthermore includes a third substrate, the second substrate receiving either the transmission circuits or the reception circuits and the third substrate receiving either the reception circuits or the transmission circuits.

## Patentansprüche

1. System zur Sendung und/oder Empfang von Signalen in einem Kommunikationssystem durch nicht-synchrone Satelliten, enthaltend:
- mehrfachgerichtete Fokussiermittel (4) vom Linsentyp mit einer Fokussierfläche mit mehreren Brennpunkten, wobei die Mittel fest zum Boden angeordnet sind,
- ein erstes Senderelement (11) und/oder Empfangselement (12) und ein zweites Senderelement (12) und/oder Empfangselement für die Signale,
- erste Mittel (380₁) zur Verschiebung des ersten Elements (11) an einem ersten Lager (7) gemäß einer ersten Linie der Brennpunkte entsprechend der Laufbahn eines ersten, nicht-synchronen Satelliten (2₁),
- zweite Mittel zur Verschiebung (380₂) des zweiten Elements (12) an einem zweiten Lager (8) entlang einer zweiten Linie von Brennpunkten entsprechend der Laufbahn eines zweiten nicht-synchronen Satelliten (2₂),
- Mittel zur Steuerung (50, 51) des ersten (380₁) und des zweiten (380₂) Verschiebemittels zur Verschiebung des ersten und des zweiten Elements (11, 12) entlang der ersten und der zweiten Linie von Brennpunkten und
- Steuermittel zur Bestimmung des Senderelements und/oder des Empfängerelements (11, 12), mit dem der Austausch der Nutzdaten erfolgen soll, und zur Umschaltung dieser bei den Verarbeitungsmitteln (54) der empfangenen und/oder gesendeten Signale,
**dadurch gekennzeichnet, dass**
das erste (11) und das zweite (12) Sender- und/oder Empfängerelement Antennen enthalten, die in der Technologie der gedruckten Schaltungen ausgebildet sind.

2. System nach Anspruch 1, **dadurch gekennzeichnet, dass** es wenigstens ein drittes Sender- und/oder Empfängerelement (120) enthält, das sich in der Nähe eines Brennpunktes des Systems befindet und zur permanenten Kommunikation mit wenigstens einem geostationären Satelliten (2₃) dient.

3. System nach einem der Ansprüche 1 oder 2, **dadurch gekennzeichnet, dass** die Steuermittel (13) in einer festen Einheit (39) des Systems enthalten sind.

4. System nach Anspruch 3, **dadurch gekennzeichnet, dass** im Betrieb das erste (11) und das zweite (12) Element und die Einheit (39) durch eine drahtlose Hochfrequenzverbindung verbunden sind.

5. System nach einem der Ansprüche 1 bis 4, **dadurch gekennzeichnet, dass** die mehrfachgerichteten Fokussiermittel vom Linsentyp durch eine Lüneburg-Linse gebildet sind.

6. System nach einem der Ansprüche 1 bis 5, **dadurch gekennzeichnet, dass** das erste und das zweite Lager (7, 8) mit Drehmitteln (9, 10) verbunden sind, die eine Verfolgung der Satelliten im Azimut ermöglichen.

7. System nach Anspruch 1, **dadurch gekennzeichnet, dass** die gedruckte Schaltung durch ein Substrat gebildet ist, das auf einer Fläche eine Kontaktfläche enthält, die entsprechend zwei orthogonalen Polarisationen durch die Sende/Empfangsschaltung angeregt werden, die auf der Fläche liegen und auf der anderen Fläche eine eine Massenebene bildende Schicht enthält.

8. System nach Anspruch 1, **dadurch gekennzeichnet, dass** die gedruckte Schaltung durch ein erstes Substrat gebildet ist, das auf einer Fläche eine Kontaktfläche und auf der anderen Fläche eine eine Masseebene bildende Schicht enthält, die mit Mitteln zur Kopplung versehen ist, und durch ein zweites Substrat, dessen Fläche, die der Fläche gegenüberliegt, die mit dem ersten Substrat verbunden ist, die Sende- und/oder Empfangsschaltung aufnimmt.

9. System nach Anspruch 8, **dadurch gekennzeichnet, dass** es zusätzlich ein drittes Substrat enthält und das zweite Substrat entweder die Sendeschaltung oder die Empfangsschaltung aufnimmt und das dritte Substrat entweder die Empfangsschaltung oder die Sendeschaltung aufnimmt.
